# EUROPEAN PATENT APPLICATION

(11) **EP 1 083 104 A1**
(43) Date of publication of application: **14.03.2001**
(21) Application number: 99117830.2
(22) Date of filing: 09.09.1999
(51) Int. Cl.: B61C 13/04, B60L 8/00

(54) **Arrangement for moving loads through an environment**

(71) Applicant: Semiconductor300 GmbH & Co KG, 01099 Dresden (DE)
(72) Inventor: Sander, Jürgen, 01665 Klipphausen (DE); Missale, Reiner, 93155 Hemau (DE)
(74) Representative: Epping, Wilhelm, Dr.-Ing.

(57) **Abstract**

It is described an arrangement (20) for moving loads (12) through an environment (10), for example containers for storing disklike objects such as wafers or the like through a semiconductor fabrication. Said arrangement (20) comprises at least one track (21), at least one conveying means (22) being movable along said track (21) and holding said load (12) and at least one light source (25) for supplying an energetic light radiation (28). Said conveying means (22) is comprised of an electric drive (29) and means (31) for converting said energy collected from said light source (25) into electric energy for said electric drive (29). Means (31) can comprise a number of solar cells (32). This will enable an uninterrupted operation of said conveying means (22), for example a specific vehicle, since the electric drive (29) will always be properly charged by electric energy, said electric energy being produced by said solar cells (32).

## Description

The present invention relates to an arrangement for moving loads through an environment, particularly through a fabrication.

For example, such arrangements can be used in the process of manufacturing semiconductor products. In this case, the loads to be moved can be formed as containers for storing objects, particularly for storing disklike objects such as wafers, flat panels, CDs, or the like.

In the technical field of manufacturing and processing wafers (for example disks on the basis of silicon), flat panels or CDs in semiconductor industries it is common and necessary that wafers are frequently moved between different locations such as processing stations. Moreover, there is a need to store said wafers in specific storage areas, when they are not needed for the moment or before they are moved to a next processing station, respectively.

Usually, wafers are stored and processed under minienvironment conditions. In light of the present invention, the term minienvironment defines a localized environment created by an enclosure to isolate a product from contamination and/or people. The requirements for such minienvironments are set forth in SEMI-standards E44 for example.

During the transportation, and any processing and storage steps or conditions, said wafers are usually stored in special containers, for example in socalled Front-Opening-Unified-Pods (FOUP).

In order to move such containers from one location to another location, they are usually carried by special vehicles which are moved along a system of tracks. Said system of tracks is generally mounted at the ceiling of said environment or fabrication, thus forming a socalled Overhead-Transport-System (OHT).

Until now, these vehicles are moved by aid of an electric drive which receives its electric energy from one or more rechargeable batteries. Even though the energy supply by such rechargeable batteries provides highly flexible OHT-systems with regard to its installation and the layout of the fabrication, it also bears several disadvantages, especially in view of a continous operation. The disadvantage of a battery driven OHT vehicle as known in the art is the reduced availability and predictability, based on the needs for recharging, recharging cycles, recharging logistic and the like.

According to another known solution, those vehicles carrying loads are moved by an electric drive which is cabled to an external electric power source. With such a system, the drawbacks regarding said needs for recharging procedures can be overcome. However, the disadvantage of such a system is that the requirements concernig its construction and installation are very high. Since the vehicle is fixedly wired with said electric power source, the known system is very unflexible, especially in those areas comprising off-branching tracks.

In view of the prior art it is an object of the present invention to provide an arrangement for moving loads through an environment which overcomes the aforementioned drawbacks and which enables a continous operation.

This object is solved by the arrangement according to independent claim 1. Further advantages, features, aspects and details of the invention are evident from the dependent claims, the description and the accompanying drawings.

According to the present invention, an arrangement for moving loads through an environment, particularly through a fabrication, is provided, said arrangement comprising at least one track, at least one conveying means being movable along said track and at least one light source for supplying an energetic light radiation, said conveying means being comprised of an electric drive and means for converting energy collected from said light source into electric energy for said electric drive.

The arrangement according to the present invention enables the conveying means to operate continously for material handling. The principle of the present invention is, that said conveying means which is provided with an electric drive continously receives an energetic light radiation from said light source. Said energy is transformed into electric energy by said menas for converting energy, which is also mounted on said conveying means. The electric energy created in such a way is used to run the electric drive und thus, the conveying means itself.

Since said energetic light radiation can be supplied continously, the aformentioned drawbacks with respect to rechargeable batteries as konwn in the art can be avoided. This will enable an uninterrupted operation of the conveying means, as its electric drive will always be properly charged with electric energy. Furthermore, the arrangement according to the present invention does not require any cables leading to an external electric power source. Thus, it is very flexible.

The present invention is not limited to a specific use of said arrangement. The arrangement can be used in any environment or fabrication, wherein a load has to be moved between different locations. Furthermore, the invention is not limited to any specific load to be carried.

In one advantageous embodiment, the arrangement according to the present invention can be used in a fabrication for semiconductor products. In the following, the invention will be explained with respect to such a fabrication, without restricting the scope of the present invention to said specific embodiment.

The arrangement according to the present invention comprises three basic features. The first feature is at least one track. The second feature is a conveying means being movable along said at least one track. The third feature is a light source for supplying an energetic light radiation. These basic features are described in more detail hereinafter.

The light source can be any source, which is able to emit an energetic light radiation. Therefore, the present invention is not limited to specific embodiments for said lihgt source. For example, the ligt source can be adapted to emit short-waved light radiation or to emit solar energy.

The means for converting energy can be any means being capable for converting said energy collected from said light source into electric energy for said electric drive. Said means can basically function in a manner that the emitted and collected energetic light radiation from said light source eliminates electrons from their state of binding. These electrons are now freely movable and can be conducted as an electric current through said electric drive.

For example, said means for converting energy collected from said light source into electric energy for said electric drive can be comprised of one or more cells, which are particularly formed as photoelectric cells or solar cells. The number and arrangement of said cell or cells depends on the amount of electric energy, which is necessary to run the electric drive.

Furthermore, one or more additional rechargeable battery or batteries can be provided. Advantageously, said battery or batteries are connected to said means for converting energy and said electric drive. The purpose of such an additional battery or batteries is to provide an intermediate storage battery, wherein electric energy produced by said means for converting energy is stored. Thus, the conveying means can also, at least temporarily, be moved under conditions, in which a light source is not available. Such a situation can arise, when the light source is installed only in one or a few locations, and the conveying means has to be moved also to locations, at which a light source is not installed. Furthermore, the rechargeable battery or batteries can bridge any periods, in which the light source does not work.

Preferably, two or more tracks are provided, said tracks forming a system of tracks. By use of a system of tracks, the conveying means can be moved very easy to any desired location within said environment. In case of a semiconductor fabrication for example, said conveying means can be easily moved to a processing station, a tool, a storage area or the like. Advantageously, the system of tracks may be comprised of one or more branching points.

According to the present invention, there is no need for a system of tracks with only one special configuration. The system of tracks can be adapted to the environment, for example the fabrication, wherein it is installed. The different tracks are arranged in such a manner that every desired location can be reached by said conveying means carrying a load. Therefore, the system of tracks may comprise one or more of the above branching points, which connect the different tracks to become said system of tracks. In this case, the different tracks function as a sort of branches which lead to different locations. The number and configuration of said tracks and said branching points depends on the respective requirements.

The present invention is not limited to a specific number of conveying means, which can be moved through the environment along said tracks. In its basic configuration, the arrangement according to the present invention can comprise at least one conveying means. However, it is also possible to use two or more conveying means. The invention is not limited to a special number of conveying means.

When more than one conveying means are used, the system of tracks may be comprised of one or more bypass-tracks. The purpose of such bypass-tracks is to move two or more different conveying means past one another. In this case, the required number of tracks for moving more than one conveying means at the same time can be minimized.

Advantageously, said track or tracks is/are formed as an overhead track or overhead tracks. In this case, the track or tracks are preferably mounted at the ceiling of the environment. Therefore, the loads carried by the conveying means of said arrangement can be moved above the people working in said fabrication and the different processing locations and units. Thus, no obstructions with respect to the transportation of the loads betweeen different locations can arise.

Preferably, said track or tracks is/are formed as a guiding rail or guiding rails. For example, the rail or rails can be formed as profiles. However, the invention is not limited to specific types of profiles. The profiles can have such a configuration or cross-section that the conveying means is guided within or outside of said profiled guiding rail or rails.

In order to allow a continous movement of said conveying means, it is necessary that said means for converting energy is provided with enough energetic light radiation. In case that the conveying means is also provided with a rechargeable intermediate battery, it would be sufficient to have a light source, which emits an energetic light radiation at only one or at a few location(s). Then, the conveying means has to pass said light source in regular intervals, in order to allow the battery to be charged.

The light source is preferably mounted on top of the track or tracks.

According to another embodiment, the light source can be adapted to emit energetic light radiation at various locations along said track or tracks. In this case the conveying means carrying said means for converting energy can pass several locations, at which an energetic light radiation is emittet. That enables the means for converting energy to be continously charged with the required energetic light radiation.

In order to achieve such a solution, said light source can comprise one or more light elements which emit an energetic light radiation independently from each other. These light elements can advantageously be the same lighting units which are also used to illuminate the entire environment or fabrication and which are usually mounted at the ceiling of said environment in a regular and a relatively close by pattern. In this case, no additional or separate light source has to be used in order to provide said means for converting energy with energetic light radiation. Since the track or system of tracks can be mounted at the ceiling of said environment or fabrication, a vehicle moving along said track or tracks will regularly pass those lighting units.

According to another embodiment, said light source can be formed as one or more light channel(s), said light channel or light channels being mounted above (on top) said track or tracks and being provided with one or more openings for emitting energetic light radiation. According to this embodiment, the light source can be formed as a lighting conduit through which an energetic light radiation is passed. At the opening or openings, said energetic light radiation can exit from the light channel(s) an can be directed to the conveying means being moved along said track or tracks beneath said light channel(s). The number of locations at which the energetic light radiation is allowed to exit the light channel(s) is determined by the number of openings arranged in said light channel(s).

The number and course of said light channel(s) can prfereably correspond to the number an course of the track(s) for moving said conveying means. Advantageously, the light channel(s) are formed as a light system, which corresponds in its configuration to the system of tracks in such a manner, that a light channel will always be on top of a track for moving said conveying means.

Preferably, said conveying means is formed as a vehicle. The configuration of said vehicle depends on the configuration of the track or tracks, along which the vehicle is moved. Advantageously, the vehicle can be comprised of one or more rollers or wheels. In a preferred embodiment, the vehicle can comprise four wheels.

At the vehicle, the electric drive, the means for converting energy and -optionally- the at least one rechargeable intermediate battery can be mounted.

Furthermore, said conveying means -for example said vehicle-can comprise at least one area for reveiving a load to be moved. Said area can be formed as a loadboard or the like.

Preferably, said load carried by the arrangement according to the present invention can be a container for storing disklike objects such as wafers -for example wafers with a diameter up to and beyond 300mm-, flat panels or CDs. However, the invention is not limited to specific kinds of loads or objects, which can be stored within a container.

Preferably, all sorts of objects can be stored within said container which have to be stored under minienvironment conditions. The term "minienvironment" has already been explained in the introducory part of the description.

In the latter case, the container can be a minienvironment container, particularly a Front-Opening-Unified-Pod (FOUP). For example, such a container is definded in SEMI-Standards E44 ans E62, the contents thereof are incorporated into the description of the present invention by reference with respect to the FOUPs. The container can also be designed according to SEMI-Standard E47.1, the content of which is also incorporated by reference into the description of the present invention.

Advantageously, the aforementioned arrangement can preferably be used as an Overhead-Transport-System (OHT). Such a system can preferably be used in the field of semiconductor manufacturing. As evident from the term "overhead", said system is mounted at the ceiling of an environment or a fabrication.

Furthermore, the aforementioned arrangement can also be used in environments with clean room class one or less. Nevertheless, the invention can also be used in dirtier environments, especially, when loads with minienvironment conditions are used.

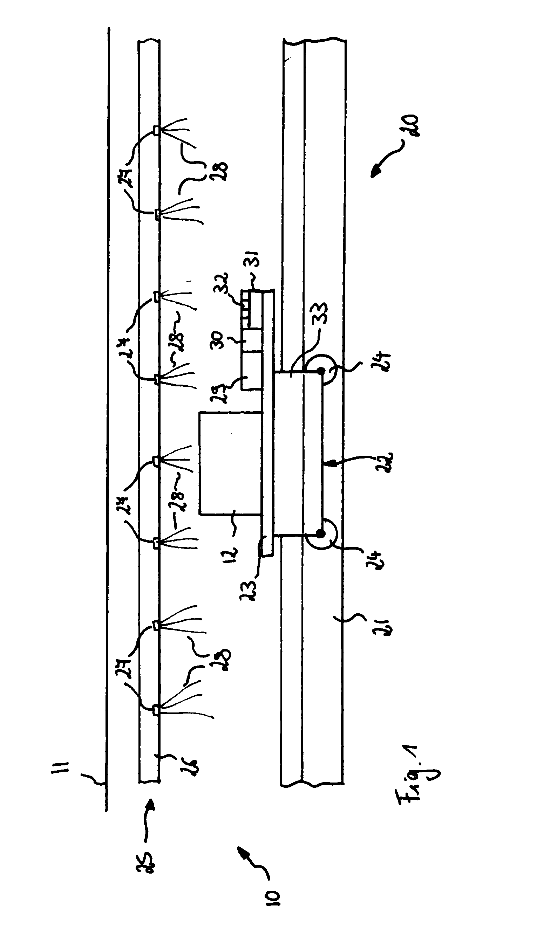

The invention will be better understood by reference to the following description of an embodiment of the invention taken in conjunction with the accompanying drawings, wherein Figure 1 shows a schematic side view of an arangement according to the present invention.

In Figure 1, an arrangement 20 for moving loads 12 is illustrated, said arrangement 20 being used in an environment 10 or fabrication for manufacturing semiconductor products such as wafers, flat panels, CDs or the like.

The arrangement 20 is arranged as a socalled Overhead-Transport-System (OHT), said system being mounted at the ceiling 11 of said environment 10. For a better understanding, ceiling 11 is indicated in Figure 1. The attachment of arrangement 20 at ceiling 11 can be accomplished in a known manner. Therefore, this attachment is not described in detail in the present embodiment.

The arrangement 20 comprises a track 21 or a system of tracks, along which a conveying means 22 can be moved. In Figure 1, a sector of only one track 21 is illustrated, in order to explain the general function of the present invention. Nevertheless, a system of tracks can be provided, which can be formed in a manner as described above and which enables the conveying means 22 to be moved to any desired location of said environment 10. The track 21 can be formed as a profiled guiding rail, outside of which said conveying means 22 is moved.

Said conveying means 22 is formed as a vehicle comprising a vehicle body 33. Furthermore, four wheels or rollers 24 are provided, which are attached to said vehicle body 33 to allow its movement along the outside of profiled track 21.

Vehicle 22 comprises an area 23 for receiving a load 12, said load 12 being formed as a container in the present example. Area 23 can be formed as a loadboard. Vehicle 22 is driven by an electric drive 29 mounted at said vehicle 22. Moreover, vehicle 22 comprises a means 31 for converting energy. Said means 31 consists of a number of cells 32, which can be formed as photoelectric cells, solar cells or the like. These cells 32 are adapted to convert an energetic light radiation 28 received from a light source 25 into electric energy for said electric drive 29. The required number of cells 32 depends on the amount of electric energy which is necessary to run said electric drive 29. Finally, at least on rechargeable battery 30 is provided on vehicle 22, said battery 30 or batteries serving as an intermediate storage device for electric energy. For that reason, rechargeable battery 30 or batteries is/are connected to means 31 as well as to electric drive 29.

In order to provide an energetic light radiation 28, a light source 25 is provided, said light source 25 being mounted on top of track 21 and vehicle 22. Since arrangement 20 is formed as an Overhead-Transport-System, light source 25 is mounted between track 21 and ceiling 11.

In the present example, light source 25 ist formed as one or more light channels 26. The number and adjustment of light channels 26 corresponds to the number and adjustments of tracks 21. If tracks 21 are formed as a system of tracks leading to different locations of environment 10, the light channels 26 are also formed as a system of light channels 26 showing the same pattern as the system of tracks 21. For that reason, the light system created by the system of light channels 26 is placed straight on top of the system of tracks 21 and therfore, it is placed always straight on top of vehicle 22 moving along said tracks 21.

The light channel(s) comprise(s) a number of openings 27 through which the energetic light radiation 28 passing through channel(s) 26 can exit from said channel(s) 26. The number of openings 27 depends on the number of locations, at which an energetic light radiation shall be made available for said means 31 converting said light energy into electric ennergy and being mounted on vehicle 22.

Now, the function of such an arrangement 20 as disclosed above will be described.

In order to move a load 12 through an environment, load 12 is deposited in the area 23 of vehicle 22, for example on a loadboard, firstly. Subsequently, vehicle 22 is moved along track 21 or the system of tracks to the desired destination.

The movement of vehivle 22 is performed by electric drive 29. In order to supply electric drive 29 with a required amount of electric energy, cells 32 of means 31, which can be formed as solar cells, are exposed to the energetic light radiation 28 that exits from light channel(s) 26 through openings 27. The energetic light radiation is collected by solar cells 32 and is transformed into electric energy therein. The elctric energy can be used to charge electric drive 29.

The principle of said arrangement 20 is to continously provide the required energy for a chargeable vehicle drive 29 by solar energy. The solar energy is provided by said system of light channels 26, which is mounted straight on top of the vehicles 22 rail track 21 or tracks. This will enable uninterrupted operation of vehicle 22, as its electric drive 29 will always be properly charged. In order to enhance the provision of electric energy for electric drive 29, rechargeable battery 30 can be used, which serves as an intermediate storage battery and which stores the electric energy produced by solar cells 32, before this energy is supplied to electric drive 29.

With the arrangement 20 according to the present invention, those drawbacks of common arrangements as mentioned in the introducory part of the description can be overcome.

### List of reference numerals

- 10: environment (fabrication)
- 11: ceiling
- 12: load (container)

- 20: arrangement for moving loads
- 21: track
- 22: conveying means (vehicle)
- 23: area for receiving a load
- 24: wheel
- 25: light source
- 26: light channel
- 27: opening
- 28: energetic light radiation
- 29: electric drive
- 30: rechargeable battery
- 31: means for converting energy
- 32: cell
- 33: vehicle body

## Claims

1. An arrangement for moving loads through an environment, particularly through a fabrication, said arrangement (20) comprising at least one track (21), at least one conveying means (22) being movable along said track (21) and at least one light source (25) for supplying an energetic light radiation (28), said conveying means (22) being comprised of an electric drive (29) and means (31) for converting energy collected from said light source (25) into electric energy for said electric drive (29).

2. The arrangement according to claim 1,
**characterized in**
that said means (31) for converting energy collected from said light source (25) into electric energy for said electric drive (29) comprises one or more cells (32), which are particularly formed as photoelectric cells or solar cells.

3. The arrangement according to claim 1 or 2,
**characterized in**
that at least one rechargeable battery (30) is provided, said battery (30) being connected to said means (31) and said electric drive (29).

4. The arrangement according to anyone of claims 1 to 3,
**characterized in**
that two or more tracks (21) are provided, said tracks (21) forming a system of tracks.

5. The arrangement according to anyone of claims 1 to 4,
**characterized in**
that said track (21) or tracks is/are formed as an overhead track or overhead tracks.

6. The arrangement according to anyone of claims 1 to 5,
**characterized in**
that said track (21) or tracks is/are formed as a guiding rail or guiding rails.

7. The arrangement according to anyone of claims 1 to 6,
**characterized in**
that said light source (25) is adapted to emit energetic light radiation (28) at various locations along said track (21) or tracks.

8. The arrangement according to anyone of claims 1 to 7,
**characterized in**
that said light source (25) comprises one or more light elements which emit said energetic light radiation (28).

9. The arrangement according to anyone of claims 1 to 8,
**characterized in**
that said light source (25) is formed as one or more light channel(s) (26), said light channel (26) or light channels being mounted above said track (21) or tracks and being provided with one or more openings (27) for emitting energetic light radiation (28).

10. The arrangement according to anyone of claims 1 to 9,
**characterized in**
that said conveying means (22) is formed as a vehicle.

11. The arrangement according to anyone of claims 1 to 10,
**characterized in**
that said conveying means comprises at least one area (23) for reveiving said load (12) to be moved.

12. The arrangement according to anyone of claims 1 to 11,
**characterized in**
that said load (12) is a container for storing disklike objects such as wafers, panels or CDs.

13. Use of an arrangement (20) according to anyone of claims 1 to 12 as an Overhead-Transport-System (OHT).
